# EUROPEAN PATENT SPECIFICATION

(11) **EP 2 876 472 B1**
(45) Date of publication and mention of the grant of the patent: **26.12.2018**
(21) Application number: 13834057.5
(22) Date of filing: 13.08.2013
(51) Int. Cl.: G02B 6/38

(54) **OPTICAL CONNECTOR**
OPTISCHER VERBINDER
CONNECTEUR OPTIQUE

(30) Priority: 30.08.2012 JP 2012190380
(43) Date of publication of application: 27.05.2015
(73) Proprietor: Yazaki Corporation, Minato-ku Tokyo 108-8333 (JP)
(72) Inventor: IKEYA, Kenichi, Susono-shi Shizuoka 410-1194 (JP); HIKOSAKA, Tomohiro, Susono-shi Shizuoka 410-1194 (JP); TSUBO, Keigo, Susono-shi Shizuoka 410-1194 (JP)
(74) Representative: Brevalex
(86) International application number: PCT/JP2013/071859
(87) International publication number: WO 2014/034429

(56) References cited:
- DE-A1- 19 913 449
- JP-A- H11 511 266
- JP-A- 2011 203 682
- JP-A- 2012 008 253
- JP-U- S6 133 008
- US-A- 4 311 359
- US-A1- 2009 245 734

## Description

### Technical Field

The present invention relates to an optical connector.

### Background Art

Optical connectors are used, for example, for connecting optical fibers to each other in a local area network (LAN) for automobiles, as known in document JP-A-2011-203682. JP-A-2012-8253 discloses another optical connector.

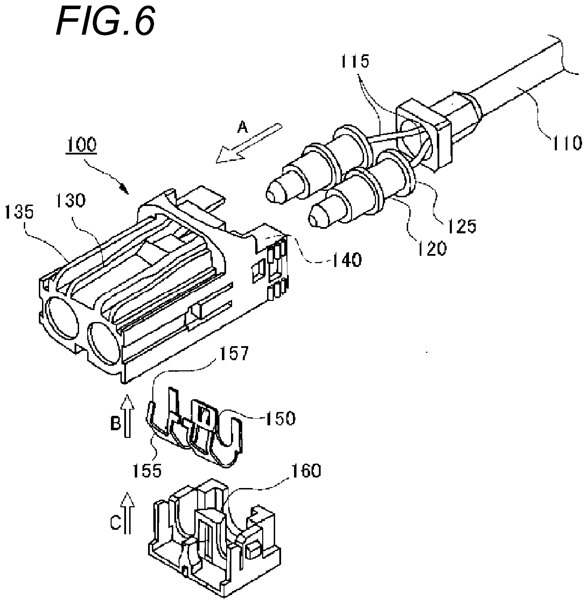

First, an optical connector in the related art will be described with reference to Fig. 6. Fig. 6 is an exploded perspective view illustrating an optical connector 100 in the related art.

The optical connector 100 includes a ferrule 120 and a housing 130. The ferrule 120 is fixed to a distal end of an optical fiber 115 which is drawn from a distal end of an optical fiber cable 110. The housing 130 has a connector fitting portion 135 to which a counterpart connector (not illustrated) is fitted, and a ferrule accommodation space 140 which accommodates the ferrule 120 inserted in a direction indicated by arrow A is defined inside the housing 130. A spring insertion portion (not illustrated) and a holding member insertion portion (not illustrated) are formed on a lower surface of the housing 130. The spring insertion portion accommodates a spring member 150 inserted in a direction indicated by arrow B. The holding member insertion portion accommodates a ferrule holding member 160 inserted in a direction indicated by arrow C. The spring member 150 presses a flange 125 formed in a rear end of the ferrule 120 against a distal end side of the housing by using a spring piece 155 located on the distal end side of the housing 130. In this manner, the ferrule 120 and a counterpart ferrule included in the counterpart connector are brought into a connection state where the distal ends abut onto each other. Accordingly, it is expected that the optical fiber 115 and a counterpart optical fiber (not illustrated) included in the counterpart connector are favorably connected to each other.

In the optical connector 100, an interlocking portion 157 tilting toward a proximal end side of the housing so that the spring piece 155 reliably engages with an inner side (that is, proximal end side of the housing) of the flange 125 (that is, so as to improve interlocking performance) is formed on a distal end side of the spring piece 155. This is because if the spring piece 155 fails to engage with the flange 125, there is a possibility that the ferrule 120 is brought into an incomplete inserted state.

In recent years, further improved interlocking performance is desired in the optical connector.

### Summary of the invention

The present invention is made in view of the above-described circumstances, and an object thereof is to provide an optical connector having improved interlocking performance.

In order to accomplish the above-described object the invention is directed to an optical connector according to claim 1.

In the optical connector according to claim 1, the spring which includes the first wall, the second wall, and the interconnection portion, and which is formed in a substantially U-shape in a cross section is inserted into the ferrule accommodation portion of the housing from the side of the interconnection portion. Therefore, an interlocking margin increases when the spring is inserted, thereby improving interlocking performance.

In the optical connector according to claim 1, the spring is held by the spacer, and the spacer is inserted into the ferrule accommodation portion. In this manner, the spring is inserted into the ferrule accommodation portion. Therefore, the spacer is caused to receive a reaction force in the insertion direction which is received from the ferrule by the spring when the spring comes into contact with the ferrule, thereby decreasing a load required for insertion work of the spring.

According to the optical connector in the present invention, it is possible to provide an optical connector which has improved interlocking performance.

Hitherto, the present invention has been briefly described. Furthermore, when a form for embodying the present invention described hereinafter (hereinafter, referred to as an "embodiment") is thoroughly read with reference to the accompanying drawings, details of the present invention will be further clarified.

### Brief Description of Drawings

Fig. 1 is an exploded perspective view illustrating an optical connector according to an embodiment.
Figs. 2(a) and 2(b) illustrate a spring, in which Fig. 2(a) is a perspective view, and Fig. 2(b) is a side view.
Fig. 3 is a side view illustrating a process in which a spacer holding a spring is inserted into a housing.
Fig. 4 describes interlocking performance of the optical connector according to the embodiment, and is a longitudinal sectional view illustrating a process in which a spacer is inserted into a housing.
Fig. 5 describes interlocking performance of an optical connector in the related art, and is a side view illustrating a process in which a spring member is inserted into a housing.
Fig. 6 is an exploded perspective view illustrating the optical connector in the related art.

### Detailed description of preferred Embodiments

Hereinafter, a specific embodiment of an optical connector according to the present invention will be described with reference to the respective drawings.

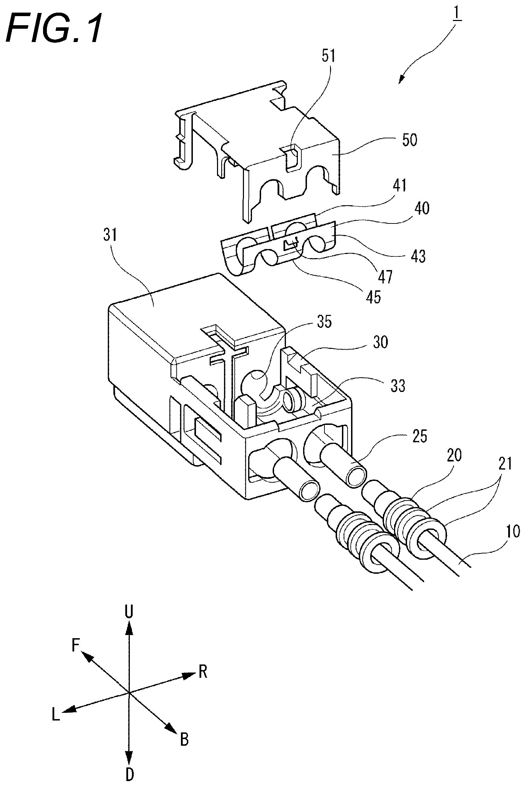

Figs. 1 to 4 illustrate an optical connector 1 according to an embodiment of the present invention. Hereinafter, in this description, directions will be described by defining a front side (F), a rear side (B), an upper side (U), a lower side (D), a left side (L), and a right side (R) as indicated by arrows in Fig. 1.

Schematically, the optical connector 1 is a connector to be fitted to a counterpart connector (not illustrated) so as to be used in reliably connecting a distal end of an optical fiber 10 included in the optical connector 1 and a distal end of a counterpart optical fiber (not illustrated) included in the counterpart connector.

The optical connector 1 includes a cylindrical ferrule 20 fixed to a front end of the optical fiber 10. In addition, the optical connector 1 includes a cylindrical split sleeve 25 fitted to a distal end of the ferrule 20. In addition, the optical connector 1 includes a rectangular housing 30 accommodating the ferrule to which the split sleeve 25 is fitted. In addition, the optical connector 1 includes a spring 40 for biasing the ferrule 20 accommodated in the housing 30 forward. Furthermore, the optical connector 1 includes a spacer 50 which is inserted into the housing 30 from above and is mounted on the housing 30.

For example, the optical fiber 10 can employ a plastic optical fiber (POF).

The ferrule 20 is formed in a cylindrical shape extending in a longitudinal direction, and an annular flange 21 is disposed to protrude on a side peripheral surface thereof. The ferrule 20 is fixed to a front end of the optical fiber 10 by using an adhesive or the like. The optical fiber 10 and the ferrule 20 fixed to the front end of the optical fiber 10 are subjected to end surface processing such as grinding using a POF cutter, for example. Distal ends of both members are processed so as to be flush with each other.

The split sleeve 25 is formed in a cylindrical shape in which a distal end portion of the ferrule 20 can be fitted to both ends. That is, a front end of the ferrule 20 is fitted to a rear end side of the split sleeve 25, and a rear end of a counterpart ferrule (not illustrated) included in the counterpart connector is fitted to a front end side of the split sleeve 25. The split sleeve 25 has one disconnected location in a circumferential direction, and is formed to be expandable when fitted to the ferrule 20.

The housing 30 includes a connector fitting portion 31 formed in a rectangular and tubular shape, and a ferrule accommodation portion 33 accommodating the ferrule 20 to which the split sleeve 25 is fitted, in a state where one end (in the present embodiment, front end) in the longitudinal direction of the ferrule 20 faces the connector fitting portion 31 side (front side in the present embodiment). The connector fitting portion 31 is configured so that a front surface has an opening, and the rear end side of the counterpart connector is inserted into the connector fitting portion 31 through the opening. The ferrule accommodation portion 33 is formed in a rectangular and tubular shape which is open upward, and is disposed to extend rearward of the connector fitting portion 31. An internal space of the connector fitting portion 31 and a space which accommodates the ferrule 20 inside the ferrule accommodation portion 33 communicate with each other through an insertion hole 35. The split sleeve 25 and the distal end portion of the ferrule 20 are inserted into the insertion hole 35.

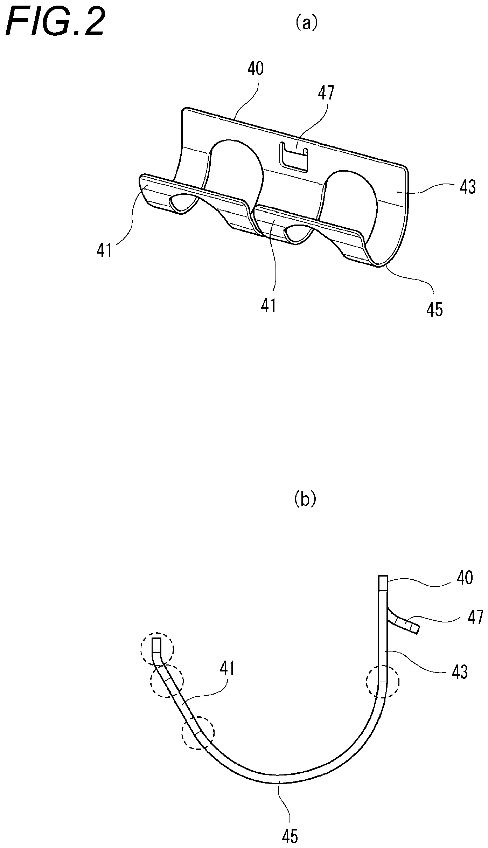

As illustrated in Figs. 1 to 2(b), the spring 40 has a first wall 41 located forward, a second wall 43 located rearward, and an interconnection portion 45 connecting lower ends of the first wall 41 and the second wall 43. The spring 40 is formed by performing a bending process on a single metal plate. The first wall 41, the second wall 43, and the interconnection portion 45 are formed integrally. In addition, as illustrated in Fig. 2(b), the first wall 41, the second wall 43, and the interconnection portion 45 are formed in a substantially U-shape in a cross section when viewed in the right-left direction. This generates a restoring force in the longitudinal direction when an external force is applied to the spring 40 in the front-rear direction. In addition, a locking piece 47 used in engaging with the spacer 50 (to be described later) is formed in the spring 40 by cutting out a portion of the second wall 43.

In addition, as illustrated by a dotted line in Fig. 2(b), bending radius processing is performed on the spring 40 on four locations in total which include three locations on the first wall 41 and one location on the second wall 43. Therefore, as compared to a case where the bending radius processing is performed on only two locations of a spring in the related art, the spring 40 according to the present embodiment is less likely to undergo plastic deformation since stress is dispersed when the external force is applied in the front-rear direction. In addition, as compared to the spring in the related art, the spring 40 according to the present embodiment has a stronger restoring force generated when the external force is applied in the front-rear direction. The spring 40 according to the present embodiment has a configuration in which the bending radius processing is performed on four locations. Alternatively, a configuration may be adopted in which the bending radius processing is performed on four or more locations.

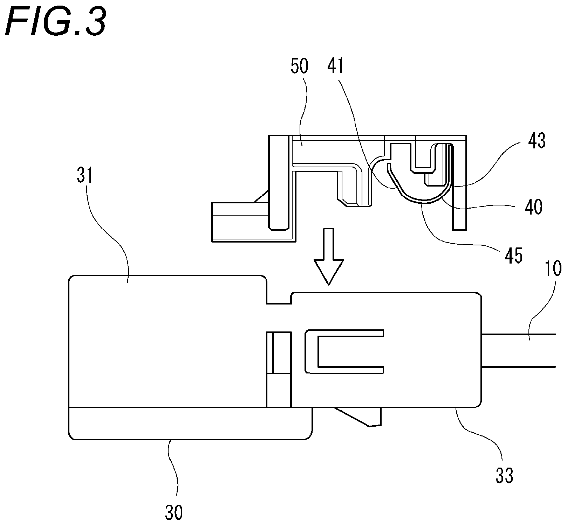

The spacer 50 is formed in a plate shape, and is mounted on the housing 30 by being inserted into the ferrule accommodation portion 33 so as to cover an opening of the ferrule accommodation portion 33. A locking hole 51 is formed in the rear of the spacer 50. The locking piece 47 of the spring 40 is locked by the locking hole 51, thereby causing the spring 40 to engage with the spacer 50. In this manner, the spacer 50 holds the spring 40 in a state where the interconnection portion 45 faces downward. Then, as illustrated in Fig. 3, the spacer 50 is mounted on the housing 30 in a state of holding the spring 40.

When the spacer 50 is mounted on the ferrule accommodation portion 33 of the housing 30, the spring 40 is accommodated inside the ferrule accommodation portion 33. The spring 40 accommodated inside the ferrule accommodation portion 33 presses and biases the ferrule 20 forward (that is, against the connector fitting portion 31 side) by the first wall 41 coming into contact with the flange 21 formed in the rear end of the ferrule 20. The ferrule 20 is biased forward in this way so as to be positioned at a regular position where a distal end thereof is normally aligned with the distal end of the counterpart ferrule.

In addition, the spacer 50 has a function in which the split sleeve 25 and the ferrule 20 which are accommodated in the ferrule accommodation portion 33 are pressed and fixed between a lower surface of the ferrule accommodation portion 33 and the spacer 50 when the spacer 50 is mounted on the ferrule accommodation portion 33 of the housing 30. That is, the spacer 50 has a function of regulating a vertical movement of the ferrule 20. In addition, the spacer 50 also has a function of regulating a lateral movement of the ferrule 20, and performs positioning of the ferrule 20 inside the housing 30 in cooperation with the spring 40. The connector fitting portion 31 of the housing 30 in which the ferrule 20 is positioned inside the housing 30 in this way is fitted to the counterpart connector. In this manner, the distal end of the optical fiber 10 and the distal end of the counterpart fiber are reliably connected to each other.

Hereinafter, interlocking performance of the optical connector 1 will be described.

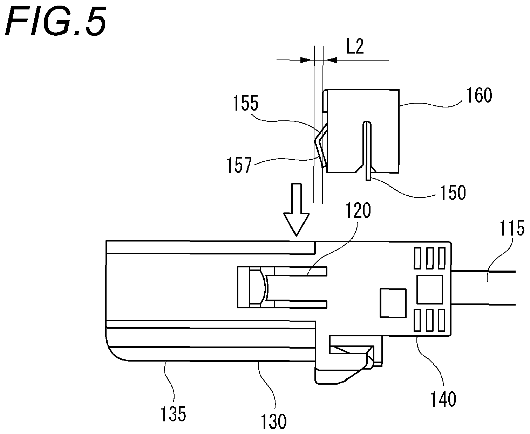

First, interlocking performance of an optical connector 100 in the related art will be described with reference to Fig. 5. As illustrated in Fig. 5, in the optical connector 100 in the related art, a spring member 150 is inserted into a spring insertion portion from an interlocking portion 157 side. Therefore, in the optical connector 100, an interlocking margin (that is, a reference numeral L2 in Fig. 5) in a rear end of a ferrule 120 which is allowed by the spring member 150 is relatively small. Accordingly, if a position of the ferrule 120 inside a housing 130 is deviated from a regular position in the front-rear direction by more than the interlocking margin L2, the spring member 150 fails to engage with the ferrule 120 when the spring member 150 is inserted. Consequently, there is a possibility that the ferrule 120 cannot be positioned at the regular position. Therefore, in the related art, it is necessary to find a measure to insert the spring member 150 in a state where the ferrule 120 is pressed against a distal end side of the housing by using a jig.

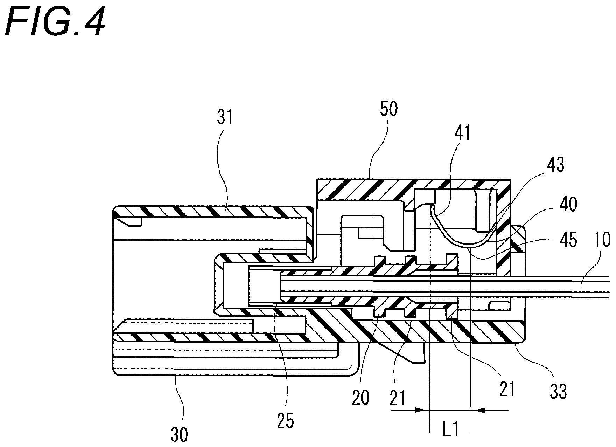

In contrast, in the optical connector 1 according to the present embodiment, as illustrated in Fig. 3, the spacer 50 is mounted on the housing 30 so that the spring 40 is inserted into the ferrule accommodation portion 33 from the interconnection portion 45 side. Therefore, as illustrated in Fig. 4, an interlocking margin (that is, a reference numeral L1 in Fig. 4) in the rear end of the ferrule 20 which is allowed by the spring 40 is large, thereby improving the interlocking performance. That is, when the spacer 50 is inserted, as long as the rear end of the ferrule 20 comes into contact with a side surface on the front side of the spring 40 formed in a substantially U-shape, the ferrule 20 is pressed and biased forward, and is positioned at the regular position. Therefore, as illustrated in Fig. 4, even if the position of the ferrule 20 inside the housing 30 is slightly deviated from the regular position in the longitudinal direction when the spacer 50 is inserted, the ferrule 20 is biased forward by the spring 40, and is moved to the regular position. Therefore, it is possible to prevent the spring 40 from being brought into an incomplete insertion state where the spring 40 fails to engage with the ferrule 20 and the ferrule 20 is not positioned at the regular position.

Hereinafter, an operation and an advantageous effect of the optical connector 1 according to the present embodiment will be described.

The optical connector 1 according to the present embodiment includes the cylindrical ferrule 20 fixed to the distal end of the optical fiber 10, the housing 30 that has the connector fitting portion 31 to which the counterpart connector is fitted, and the ferrule accommodation portion 33 which accommodates the ferrule 20 in a state where the front end of the ferrule 20 faces the connector fitting portion 31 side, and the spring 40 that is inserted into the ferrule accommodation portion 33 from above, and that biases the ferrule 20 accommodated in the ferrule accommodation portion 33 against the connector fitting portion 31 side. The spring 40 includes the first wall 41, the second wall 43, and the interconnection portion 45 which connects each end of the first wall 41 and the second wall 43. The first wall 41, the second wall 43, and the interconnection portion 45 are formed in a substantially U-shape as a whole in a cross section viewed in the lateral direction. The spring 40 is inserted into the ferrule accommodation portion 33 from the interconnection portion 45 side.

In this manner, the spring 40 which has the first wall 41, the second wall 43, and the interconnection portion 45, and which is formed in the substantially U-shape is inserted into the ferrule accommodation portion 33 of the housing 30 from the interconnection portion 45 side, thereby biasing the ferrule 20 against the connector fitting portion 31 side. Therefore, the interlocking margin is large when the spring 40 is inserted, thereby improving the interlocking performance.

As a result, according to the optical connector 1 in the present embodiment, it is possible to provide an optical connector which has the improved interlocking performance.

In addition, the optical connector 1 according to the present embodiment further includes the spacer 50 that is inserted into the ferrule accommodation portion 33 from above and is mounted on the housing 30, in a state of holding the spring 40.

In this manner, the spring 40 is held by the spacer 50, and the spacer 50 is inserted into the ferrule accommodation portion 33. Accordingly, the spring 40 is inserted into the ferrule accommodation portion 33.

As a result, according to the optical connector 1 in the present embodiment, a reaction force applied in the vertical direction which is received from the ferrule 20 by the spring 40 when the spring 40 comes into contact with the ferrule 20 can be received by the spacer 50 which a worker easily grips. Therefore, a load required for carrying out insertion work of the spring 40 is lessened, thereby improving workability.

The technical scope of the present invention is not limited to the above-described embodiment. The above-described embodiment can be modified or improved in various ways within the technical scope of the present invention.

For example, the optical connector 1 according to the present embodiment adopts a configuration in which the spring 40 is held by the spacer 50 and the spacer 50 is inserted into the ferrule accommodation portion 33 so that the spring 40 is inserted into the ferrule accommodation portion 33. Alternatively, in an example not forming part of the invention, a configuration may be adopted in which the spring 40 is directly inserted into the ferrule accommodation portion 33. In this case, a configuration may be adopted in which the spacer 50 is further inserted into the ferrule accommodation portion 33 after the spring 40 is inserted into the ferrule accommodation portion 33. Alternatively, in a further example not forming part of the invention, a configuration may be adopted which omits the spacer 50.

### Industrial Applicability

An optical connector according to the present invention is useful in that the optical connector having improved interlocking performance can be provided.

### Reference Signs List

1: optical connector
10: optical fiber
20: ferrule
30: housing
31: connector fitting portion
33: ferrule accommodation portion
35: insertion hole
40: spring
41: first wall
43: second wall
45: interconnection portion
47: locking piece
50: spacer
51: locking hole

## Claims

1. An optical connector (1) comprising:
a cylindrical ferrule (20) fixed to a distal end of an optical fiber (10);
a housing (30) that includes a connector fitting portion (31) to which a counterpart connector may be fitted, and a ferrule accommodation portion (33) which accommodates the ferrule (20) in a state where one end of the ferrule (20) in a longitudinal direction faces a side of the connector fitting portion (31);
a spring (40) that is inserted into the ferrule accommodation portion (33) in an insertion direction which is a direction perpendicular to the longitudinal direction, and that biases the ferrule (20) accommodated in the ferrule accommodation portion (33) against the connector fitting portion (31) side; and
a spacer (50) that is inserted into the ferrule accommodation portion (33) in the insertion direction and is mounted on the housing (30) in a state of holding the spring (40), wherein
the spring (40) has a first wall (41), a second wall (43), and an interconnection portion (45) which interconnects each one end of the first wall (41) and the second wall (43),
the first wall (41), the second wall (43), and the interconnection portion (45) are formed in a substantially U-shape as a whole in a cross section viewed in a direction perpendicular to the longitudinal direction and the insertion direction, and
the spring (40) is inserted into the ferrule accommodation portion (33) from a side of the interconnection portion (45),
**characterized by**:
a locking piece (47) formed in the spring (40) by cutting out a portion of the second wall (43), and
a locking hole (51) formed in the rear of the spacer (50),
wherein the locking piece (47) is locked by the locking hole (51), thereby causing the spring (40) to engage with the spacer (50).

## Patentansprüche

1. Optischer Verbinder (1), umfassend:
eine zylindrische Hülse (20), die an einem distalen Ende einer optischen Faser (10) befestigt ist;
ein Gehäuse (30), das einen Verbinderanpassungsabschnitt (31), an dem ein Gegenstückverbinder angebracht werden kann, und einen Hülsenaufnahmeabschnitt (33), der die Hülse (20) in einem Zustand aufnimmt, in dem ein Ende der Hülse (20) in Längsrichtung einer Seite des Verbinderanpassungsabschnitts (31) zugewandt ist;
eine Feder (40), die in den Hülsenaufnahmeabschnitt (33) in einer Einführungsrichtung, die eine Richtung senkrecht zur Längsrichtung ist, eingeführt wird, und die die im Hülsenaufnahmeabschnitt (33) aufgenommene Hülse (20) gegen die Seite des Verbinderanpassungsabschnitts (31) drückt; und
einen Abstandshalter (50), der in Einführungsrichtung in den Hülsenaufnahmeabschnitt (33) eingesetzt und in einem die Feder (40) haltenden Zustand am Gehäuse (30) angebracht ist, wobei
die Feder (40) eine erste Wand (41), eine zweite Wand (43) und einen Verbindungsabschnitt (45), der jedes Ende der ersten Wand (41) und der zweiten Wand (43) verbindet, aufweist,
die erste Wand (41), die zweite Wand (43) und der Verbindungsabschnitt (45) insgesamt in einer im Wesentlichen U-förmigen Form in einem Querschnitt, der in einer Richtung senkrecht zur Längsrichtung und zur Einführungsrichtung betrachtet wird, ausgebildet sind und
die Feder (40) in den Hülsenaufnahmeabschnitt (33) von einer Seite des Verbindungsabschnitts (45) aus eingesetzt wird,
**gekennzeichnet durch**:
ein Verriegelungsstück (47), das in der Feder (40) durch Ausschneiden eines Abschnitts der zweiten Wand (43) gebildet ist, und
ein Verriegelungsloch (51), das in der Rückseite des Abstandshalters (50) gebildet ist, wobei das Verriegelungsstück (47) durch das Verriegelungsloch (51) verriegelt ist, wodurch die Feder (40) in den Abstandshalter (50) eingreift.

## Revendications

1. Connecteur optique (1) comprenant :
une férule cylindrique (20) fixée sur une extrémité distale d'une fibre optique (10) ;
un logement (30) qui comprend une partie de fixation de connecteur (31) sur laquelle un connecteur homologue peut être fixé, et une partie de placement de férule (33) qui contient la férule (20) dans un état dans lequel une extrémité de la férule (20) dans une direction longitudinale est tournée vers un côté de la partie de fixation de connecteur (31) ;
un ressort (40) qui est inséré dans la partie de placement de férule (33) dans une direction d'insertion qui est une direction perpendiculaire à la direction longitudinale, et qui incline la férule (20) contenue dans la partie de placement de férule (33) contre la partie de fixation de connecteur (31) ; et
une entretoise (50) qui est insérée dans la partie de placement de férule (33) dans la direction d'insertion et est montée sur le logement (30) dans un état de maintien du ressort (40), dans lequel
le ressort (40) possède une première paroi (41), une seconde paroi (43), et une partie d'interconnexion (45) qui relie chaque extrémité de la première paroi (41) et de la seconde paroi (43),
la première paroi (41), la seconde paroi (43) et la partie d'interconnexion (45) sont formées sensiblement en forme de U, en intégralité dans une section transversale vue dans une direction perpendiculaire à la direction longitudinale et la direction d'insertion, et
le ressort (40) est inséré dans la partie de placement de férule (33) depuis un côté de la partie d'interconnexion (45),
**caractérisé par** :
une partie de blocage (47) formée dans le ressort (40) en découpant une partie de la seconde paroi (43), et
un orifice de blocage (51) formé dans la partie arrière de l'entretoise (50),
dans lequel la partie de blocage (47) est bloquée par l'orifice de blocage (51), afin de provoquer l'engagement du ressort (40) avec l'entretoise (50).
